# EUROPEAN PATENT SPECIFICATION

(11) **EP 2 620 996 B1**
(45) Date of publication and mention of the grant of the patent: **23.10.2019**
(21) Application number: 12180887.7
(22) Date of filing: 17.08.2012
(51) Int. Cl.: H01M 2/10, H01M 10/613, H01M 10/625

(54) **Battery module with water protected air inlet**
Batteriemodul mit Spritzwassergeschütztem Lufteinlass
Module de batterie avec une entrée d'air protegée contre d'eau

(30) Priority: 26.01.2012 US 201261591170 P; 23.07.2012 US 201213555925
(43) Date of publication of application: 31.07.2013
(73) Proprietor: Samsung SDI Co., Ltd., Yongin-si, Gyeonggi-do (KR)
(72) Inventor: Lee, Sang-Hoon, Yongin-si (Gyeonggi-do) (KR)
(74) Representative: Santarelli

(56) References cited:
- WO-A1-00/36696
- JP-A- 2010 233 417
- US-A- 5 215 834
- US-A- 5 806 948

## Description

### BACKGROUND

### 1. Field

An aspect of the invention relates generally to a battery module. Another aspect of the invention relates to an electric vehicle including a battery module.

### 2. Description of the Related Art

A rechargeable battery is a battery that can be recharged and discharged, unlike a primary battery that cannot be recharged. A low-capacity rechargeable battery is used for small portable electronic devices such as a mobile phone, a notebook computer, a camcorder, and the like. A large-capacity rechargeable battery may be used as a power supply for driving a motor, such as that of a hybrid car. Recently, a high-output rechargeable battery using a non-aqueous electrolyte solution of high energy density has been developed. The high-output rechargeable battery is configured as a large-capacity battery module in which a plurality of rechargeable batteries are connected to each other in series so as to be used to drive a motor of devices requiring a large amount of power, for example, an electric car or the like. The battery module comprises several to tens of rechargeable batteries. As a consequence, heat generated from each of the rechargeable batteries should be easily emitted. When heat is not normally emitted, the internal temperature of the rechargeable battery increases, and as a result, adverse reactions may occur, thereby shortening the life-span of the rechargeable battery. Further, when the temperature of the rechargeable battery is continuously increased, the rechargeable battery may combust or explode. A battery module includes a plurality of rechargeable batteries and a housing forming a shape for receiving the rechargeable batteries, and a fan for cooling the rechargeable batteries is installed in the housing. However, when a cooling fan is installed, the volume of the battery module is increased and power for driving the fan is consumed thereby deteriorating the output of the battery module. It will be appreciated that the above information disclosed in this Background section is only for enhancement of understanding of the background of the described technology and therefore it may contain information that does not form the prior art that is already known to a person of ordinary skill in the art.

### SUMMARY OF THE INVENTION

Embodiments of the invention seek to provide a battery module for improving cooling efficiency.

According to a first aspect of the invention there is provided a battery module comprising: at least one rechargeable battery unit; a housing for housing the at least one rechargeable battery unit, the housing having an air inlet for passage of air into the housing, wherein the air inlet is provided with an opening/closing member for selectively controlling an opening state of the air inlet based on air flow pressure from outside the housing acting on the opening/closing member.

The battery module further includes liquid inhibition means for inhibiting passage of liquid via the air inlet or an air outlet of the housing to the at least one rechargeable battery unit.

The liquid inhibition means comprises at least one air permeable member disposed over at least one of the air inlet and the air outlet.

The liquid inhibition means comprises a cover member protruding outwardly from the housing and disposed at least partially over the air inlet to inhibit liquid ingress into the housing via the air inlet.

In an embodiment, the cover member comprises a curved plate portion extending over the air inlet and two adjoining side portions extending outwardly from the housing to the curved plate portion.

In an embodiment, the battery module further includes a guide member for guiding air into the housing via the air inlet, a space for air flow being provided between the cover member and the guide member.

In an embodiment, the guide member comprises a curved plate portion protruding outwardly from the housing and downwardly from the air inlet.

In an embodiment, the battery module further includes an inflow pipe protruding outwardly from the housing and being in fluid communication with the air inlet.

In an embodiment, the battery module further includes wherein the iiquid inhibition means comprises liquid discharge means for discharging liquid received inside the housing via the air inlet.

In an embodiment, the battery module further includes in the liquid discharge means defines an aperture in the inflow pipe.

In an embodiment, the battery module further includes the opening closing/member is rotatably mounted on the housing to rotate between an open state in which air flows into the air inlet and a closed state in which air is prevented from flowing into the air inlet.

In an embodiment the battery module further comprises resilient biasing means for biasing the opening/closing member towards a closed state.

In an embodiment, the battery module further includes the air inlet is provided on an upper portion of one face of the housing and an air outlet is provided on a lower portion of an opposing face of the housing.

According to a second aspect of the invention, there is provided an electric vehicle including a battery module according to any preceding claim wherein the air inlet is disposed on a face of the housing orientated to face in a direction of movement of the electric vehicle such that air flow pressure generated by movement of the electric vehicle acts on the opening/closing member.

The electric vehicle may be an electric automobile, an electric motor cycle or an electric bicycle, for example.

In an embodiment, the battery module further includes the air inlet is exposed to outside the vehicle.

An exemplary embodiment provides a battery module including: a plurality of rechargeable batteries; a housing accommodating the rechargeable batteries and including an inlet; and an opening/closing member for controlling opening of the inlet according to air flow pressure. The opening/closing member is rotatably installed on the housing, and the opening/closing member includes a shaft member and a blocking plate combined with the shaft member. An elastic member for applying torque is installed on the opening/closing member. According to the exemplary embodiment, the opening/closing member is opened by air flow pressure so the battery module can efficiently cool the rechargeable batteries without an additional air blower.

### BRIEF DESCRIPTION OF THE DRAWINGS

FIG. 1 shows a perspective view of a battery module according to a first exemplary embodiment of the present invention.
FIG. 2 shows a cross-sectional view with respect to a line II-II of FIG. 1.
FIG. 3 shows a perspective view of an opening/closing member installed in a housing according to a first exemplary embodiment of the present invention.
FIG. 4 shows a partial perspective view of a battery module according to a second exemplary embodiment of the present invention.
FIG. 5 shows a cross-sectional view of a battery module according to a second exemplary embodiment of the present invention.
FIG. 6 shows a perspective view of a battery module according to a third exemplary embodiment of the present invention.
FIG. 7 shows a cross-sectional view with respect to a line VII-VII of FIG. 6.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention as defined by the appended claims. Like reference numerals designate like elements throughout the specification.

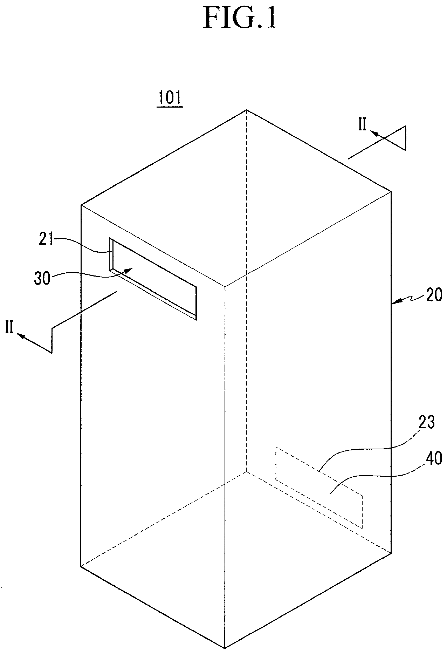

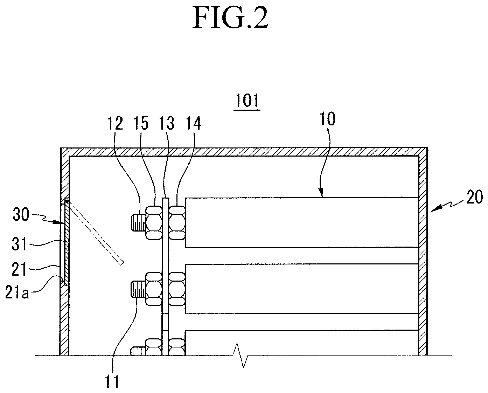

FIG. 1 shows a perspective view of a battery and FIG. 2 shows a cross-sectional view with respect to a line II-II of FIG. 1.

Referring to FIG. 1 and FIG. 2, the battery module 101 includes a plurality of rechargeable batteries 10 and a housing 20 in which the rechargeable batteries 10 are accommodated.

The rechargeable batteries 10 are installed in the housing 20. The rechargeable batteries 10 will be exemplified as square lithium ion rechargeable batteries. However, it will be appreciated that the present invention is not restricted thereto, but is applicable to various types of batteries such as lithium polymer batteries or cylindrical batteries.

A rechargeable battery 10 includes a positive terminal 11, a negative terminal 12, and nuts 14 and 15 fastened to the positive terminal 11 and the negative terminal 12 and supporting a connecting member 13. The rechargeable batteries 10 are coupled in series by the connecting member 13 and are installed in the housing 20.

The housing 20 is formed to have an approximately rectangular parallelepiped shape, and has an inlet 21 through which air is input and an outlet 23 through which air is output. The inlet 21 is formed on an upper portion of a front face of the housing 20, and the outlet 23 is formed on a lower portion of a rear face of the housing 20.

An opening/closing member 30 for controlling an open state of the inlet 21 is rotatably mounted on the housing 20 to be rotatable at the inlet 21 between an open state in which air flows into the inlet 21 and a closed state in which air is prevented from flowing into the inlet 21 from outside the housing 20.

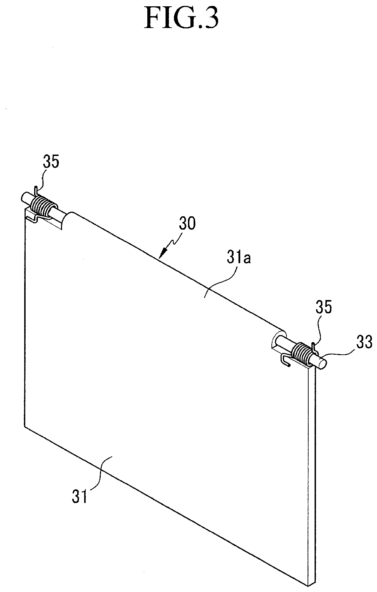

As shown in FIG. 2 and FIG. 3, the opening/closing member 30 includes a shaft member 33 and a blocking plate 31 connected to the shaft member 33. The shaft member 33 is formed to have a circular bar shape, and is fixedly installed in the housing 20 through a top part 31a of the blocking plate 31. A hole, in which the shaft member 33 is inserted, is formed in the top part 31a of the blocking plate 31 in a length direction of the blocking plate 31.

The blocking plate 31 is formed to have a square shape and is rotatably combined with the shaft member 33. Moreover, the blocking plate 31 is formed to block the inlet 21, and a resilient biasing means, such as a torsion spring 35, for applying a rotatable pressing force to the blocking plate 31 is formed on the shaft member 33. A torsion spring 35 is put on both ends of the shaft member 33, and pressurizes a bottom of the blocking plate 31 to face an external side of the housing 20. Accordingly, the blocking plate 31 can be installed to close and seal the inlet 21 by the resilient biasing action of the torsion spring 35.

A protrusion 21a that is protruded and contacts the bottom of the blocking plate 31 and supports the blocking plate 31 is formed in the inlet 21. The protrusion 21a is formed in a lateral direction of the inlet 21. The protrusion 21a prevents the bottom of the blocking plate from moving to outside the inlet.

The inlet 21 is exposed on the outside of a device in which the battery module 101 is installed. For example, when the battery module 101 is installed in an electrical motorcycle or an electrical bicycle, the battery module 101 is installed on the left bottom of the driver's seat and the inlet 21 is exposed to the outside. In another example, when the battery module 101 is installed in a cell electric vehicle, a pipe for receiving external air is installed for connection to the inlet 21.

Furthermore, the inlet 21 is installed to face the direction of movement of the device in which the battery module 101 is installed. When the device moves, the resulting air flow pressure acts on the blocking plate 31 and the blocking plate 31 is rotated to open the inlet 21, and cooling air is input into the housing 20 through the inlet 21.

The outlet 23 is formed on the lower portion of the rear side of the housing 20, and an air permeable film 40 is installed in the outlet 23. The air permeable film 40 is made of a Teflon-based resin and for example may be made of polytetrafluoroethylene (PTFE). Furthermore, the air permeable film can be made of a perfluoroalkoxy polymer (PFA), fluorinated ethylene propylene (FEP), an ethylene chlorotrifluoroethylene (ECTFE) copolymer, ethylene tetrafluoroethylene (ETFE), or polyvinylidene fluoride (PVDF), for example.

Pores that are larger than the diameter of gas molecules and are smaller than the diameter of water particles are formed in the air permeable film 40. Accordingly, the gas molecules can pass through the air permeable film 40 and the water particles cannot pass therethrough such that the gas inside the housing 20 can be discharged to the outside and liquids are prevented from entering into the housing 20 from the outside.

It will be appreciated that the above described air permeable film 40 can be installed in the inlet 21, and when it is installed in the inlet 21, rainwater may be prevented from entering the inlet.

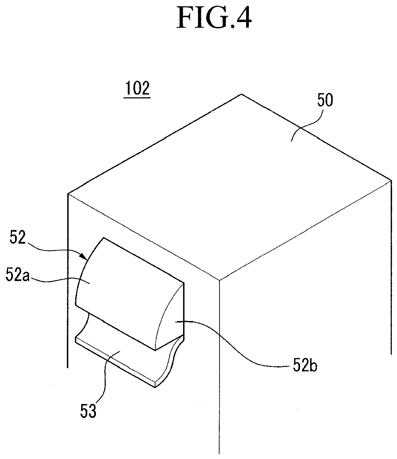

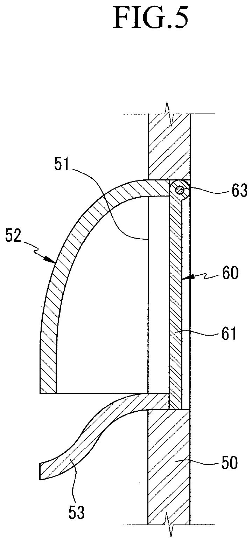

FIG. 4 shows a partial perspective view of a battery module according to a second exemplary embodiment of the present invention, and FIG. 5 shows a cross-sectional view of a battery module according to the second exemplary embodiment of the present invention.

Referring to FIG. 4 and FIG. 5, the battery module 102 includes a housing 50 and rechargeable batteries installed in the housing 50.

An inlet 51 and an outlet are formed in the housing 50, and in detail, the inlet 51 is formed at an upper portion of the front sideof the housing 50 and the outlet is formed at a lower portion of the rear side of the housing 50.

An opening/closing member 60 for controlling an opening state of the inlet 51 by air flow pressure is installed in the inlet 51, and the opening/closing member 60 includes a shaft member 63 and a blocking plate 61 combined with the shaft member 63. The blocking plate 61 is biased toward the inlet 51 by the torsion spring to thus close the inlet 51.

The battery module 102 is formed with an equivalent structure of the battery module according to the first exemplary embodiment except that guide members are installed in the inlet 51, and no repeated description of common features of the two embodiments will be provided.

A top guide member 52 is installed on the top of the inlet 51 and a bottom guide member 53 is installed on the bottom of the inlet 51. The top guide member 52 forms a cover member and includes a front unit 52a that protrudes from the outside of the housing at the top of the inlet 51 and that extends to the bottom of the inlet 51, and a side unit 52b for connecting a side end of the front unit 52a to an external wall of the housing 50.

The front unit 52a is formed to have a curved arc plate shape, and is protrudes over a front side on the inlet 51 from the top of the inlet 51. The side unit 52b is formed to have a plane plate shape, and blocks a portion between the side end of the front unit 52a and the housing 50.

When the top guide member 52 is installed according to the present exemplary embodiment, moisture is prevented from entering into the housing 50 from the outside.

The bottom guide member 53 is formed to have a plate shape that protrudes outwardly from the front side of the housing 50 at the bottom of the inlet 51, and the bottom guide member 53 is formed to have an arc shape that is smoothly curved downward from the inlet 51 and a front end is protruded toward the front side.

The bottom guide member 53 is distanced from the top guide member 52 such that a space is formed between the top guide member 52 and the bottom guide member 53. The bottom guide member 53 controls air to be input into the housing 50, and the air guided by the bottom guide member 53 is input into the inlet 51 to cool the rechargeable batteries and is then discharged to the outside through the outlet.

According to the above-described present exemplary embodiment, the top guide member 52 is installed to inhibit the inflow of rain into the housing 50, and the bottom guide member 53 guides the air to be supplied into the housing 50.

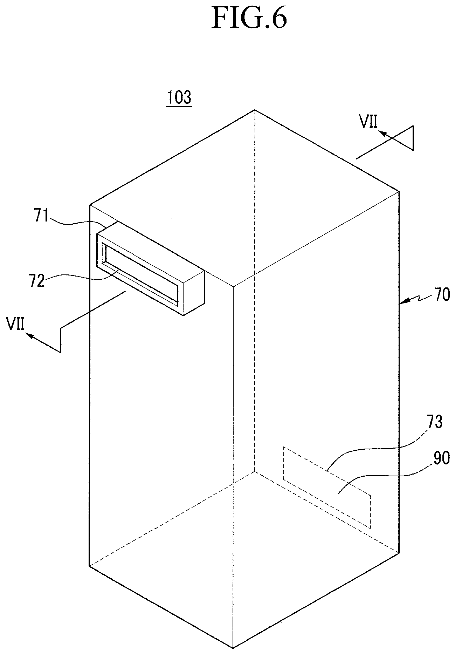

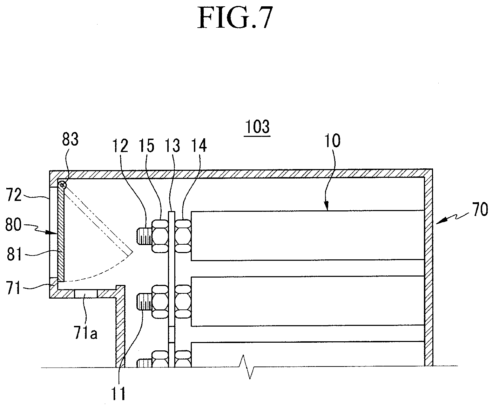

FIG. 6 shows a perspective view of a battery module according to a third exemplary embodiment of the present invention, and FIG. 7 shows a cross-sectional view with respect to a line VII-VII of FIG. 6.

Referring to FIG. 6 and FIG. 7, the battery module 103 includes a housing 70 and rechargeable batteries 10 installed in the housing 70.

The housing 70 is substantially formed to have a cuboidal box shape with an inner space. An inlet 72 and an outlet 73 are formed in the housing 70, and in detail, the inlet 72 is formed on an upper portion of the front side of the housing 70 and the outlet 73 is formed on a lower portion of the rear side of the housing 70.

An opening/closing member 80 for controlling an opening state of the inlet 72 by air flow pressure is installed in the inlet 72, and the opening/closing member 80 includes a shaft member 83 and a blocking plate 81 combined with the shaft member 83. The blocking plate 81 is pressurized by the torsion spring to close the inlet 72.

An inflow pipe 71 protruding from the front side of the housing is formed on the front upper portion of the housing 70, and the inlet 72 is formed on the front end of the inflow pipe 71. The opening/closing member 80 is installed to open and close the inlet 72 in the inflow pipe 71.

The battery module 103 is formed with the equivalent structure of the battery module according to the first exemplary embodiment except for the structure of the housing 70, and no repeated description will be provided for common features of the two embodiments.

The inflow pipe 71 is configured to be a quadrangular pipe, and is protruded from the front side of the housing 70 on an upper portion of the front side of the housing 70 thereby being connected to the inside of the housing 70. The present exemplary embodiment has exemplified that the inflow pipe 71 has a quadrangular cross-section, but it will be appreciated that the present invention is not restricted thereto, and the inflow pipe can have various structures such as a circular pipe.

An open inlet 72 is formed at the front end of the inflow pipe 71, and an opening/closing member 80 is installed at the back of the inlet 72. The opening/closing member 80 is installed in the inlet 72 in a rotatable manner to open the inlet 72 depending on the air flow pressure acting on the opening/closing member 80.

The opening/closing member 80 includes the shaft member 83 and the blocking plate 81 combined with the shaft member 83. The blocking plate 81 is pressurized into the inlet 72 by a torsion spring to close the inlet 72. Therefore, the inlet 72 can be opened when air flow pressure that is greater than the pressing force of the torsion spring acts on the opening/closing member.

The inflow pipe 71 can be installed to be exposed to the outside of the device on which the battery module is mounted or be connected to a pipe for receiving external air.

A hole 71a is formed on the bottom of the inflow pipe 71, and the hole 71a functions as a passage for discharging rainwater that enters into the inflow pipe 71.

The outlet 73 is formed on a bottom portion of the rear side of the housing 70, and an air permeable film 90 is installed in the outlet 73. The air permeable film 90 is made of Teflon-based resin, and may, for example, be made of polytetrafluoroethylene (PTFE). In other examples,, the air permeable film can be made of a perfluoroalkoxy polymer (PFA), fluorinated ethylene propylene (FEP), an ethylene chlorotrifluoroethylene (ECTFE) copolymer, ethylene tetrafluoroethylene (ETFE), or polyvinylidene fluoride (PVDF).

Pores that are larger than the diameter of gas molecules and are smaller than the diameter of water particles are formed in the air permeable film 90. Accordingly, the gas molecules can pass through the air permeable film 90 and the water particles cannot pass through the air permeable film 90 such that the gas inside the housing 70 can be discharged to the outside and liquids are prevented from entering into the housing 70 from the outside by the outlet 73. The air permeable film inhibiting ingress of liquid can, in some embodiments of the invention, be installed in the inlet 72.

When the inflow pipe 71 is formed according to the present exemplary embodiment, the opening/closing member 80 is driven in the inflow pipe 71 to prevent interference with the rechargeable batteries 10, and the rainwater that enters through the inflow pipe 71 can be easily discharged through the hole 71a.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A battery module comprising:
at least one rechargeable battery unit;
a housing for housing the at least one rechargeable battery unit, the housing having an air inlet for passage of air into the housing,
wherein the air inlet is provided with an opening/closing member configured for selectively controlling an opening state of the air inlet based on air flow pressure from outside the housing acting on the opening/closing member,
wherein the opening/closing member is rotatably installed on said housing to rotate between an open state in which air flows into the air inlet and a closed state in which air is prevented from flowing into the air inlet,
said opening/closing member including a shaft member and a blocking plate connected to the shaft member, a resilient biasing means being formed on the shaft member,
said resilient biasing means being configured for applying a rotatable pressing force to the blocking plate so that the blocking plate is pressurized into the inlet to close the inlet,
wherein the inlet is configured to be opened when said air flow pressure is greater than the pressing force of the resilient biasing means acting on the opening/closing member.

2. A battery module according to claim 1 further comprising liquid inhibition means for inhibiting passage of liquid via the air inlet or an air outlet of the housing to the at least one rechargeable battery unit.

3. A battery module according to claim 2, wherein the liquid inhibition means comprises at least one air permeable member disposed over at least one of the air inlet and the air outlet.

4. A battery module according to claim 2 or 3, wherein the liquid inhibition means comprises a cover member protruding outwardly from the housing and disposed at least partially over the air inlet to inhibit liquid ingress into the housing via the air inlet.

5. A battery module according to claim 4, wherein the cover member comprises a curved plate portion extending over the air inlet and two adjoining side portions extending outwardly from the housing to the curved plate portion.

6. A battery module according to claim 4 or 5 further comprising a guide member for guiding air into the housing via the air inlet, a space for air flow being provided between the cover member and the guide member.

7. A battery module according to claim 6, wherein the guide member comprises a curved plate portion protruding outwardly from the housing and downwardly from the air inlet.

8. A battery module according to any preceding claim further comprising an inflow pipe protruding outwardly from the housing and being in fluid communication with the air inlet.

9. A battery module according to any one of claims 2 to 8, wherein the liquid inhibition means comprises liquid discharge means for discharging liquid received inside the housing via the air inlet.

10. A battery module according to claim 9 wherein the liquid discharge means defines an aperture in the inflow pipe.

11. A battery module according to any preceding claim further comprising resilient biasing means for biasing the opening/closing member towards a closed state.

12. A battery module according to any preceding claim wherein the air inlet is provided on an upper portion of one face of the housing and an air outlet is provided on a lower portion of an opposing face of the housing.

13. An electric vehicle including a battery module according to any preceding claim wherein the air inlet is disposed on a face of the housing orientated to face in a direction of movement of the electric vehicle such that air flow generated by movement of the electric vehicle acts on the opening/closing member.

14. An electric vehicle according to claim 13 wherein the air inlet is exposed to outside the vehicle

## Patentansprüche

1. Batteriemodul, umfassend:
mindestens eine wiederaufladbare Batterieeinheit;
ein Gehäuse zum Unterbringen der mindestens einen wiederaufladbaren Batterieeinheit, wobei das Gehäuse einen Lufteinlass für den Luftdurchtritt in das Gehäuse hinein aufweist,
wobei der Lufteinlass mit einem Öffnungs-/Schließelement versehen ist, das dazu ausgestaltet ist, einen Öffnungszustand des Lufteinlasses auf der Basis von Luftstromdruck von außerhalb des Gehäuses, der auf das Öffnungs-/Schließelement wirkt, selektiv zu steuern,
wobei das Öffnungs-/Schließelement auf dem Gehäuse drehbar montiert ist, um sich zwischen einem offenen Zustand, in dem Luft in den Lufteinlass hineinströmt, und einem geschlossenen Zustand, in dem Luft davon abgehalten wird, in den Lufteinlass hineinzuströmen, zu drehen
wobei das Öffnungs-/Schließelement ein Wellenelement und eine mit dem Wellenelement verbundenen Blockierplatte enthält, wobei auf dem Wellenelement ein elastisches Vorspannmittel gebildet ist,
wobei das elastische Vorspannmittel dazu ausgestaltet ist, eine drehbare Druckkraft auf die Blockierplatte auszuüben, sodass die Blockierplatte in den Einlass hineingedrückt wird, um den Einlass zu schließen,
wobei der Einlass dazu ausgestaltet ist, geöffnet zu werden, wenn der Luftstromdruck größer ist als die Druckkraft des elastischen Vorspannmittels, die auf das Öffnungs-/Schließelement wirkt.

2. Batteriemodul nach Anspruch 1, ferner umfassend Flüssigkeitssperrmittel zum Versperren eines Flüssigkeitsdurchtritts über den Lufteinlass oder über einen Luftauslass des Gehäuses zu der mindestens einen wiederaufladbaren Batterieeinheit.

3. Batteriemodul nach Anspruch 2, wobei das Flüssigkeitssperrmittel mindestens ein luftdurchlässiges Element umfasst, das über mindestens einem aus dem Lufteinlass und dem Luftauslass angeordnet ist.

4. Batteriemodul nach einem der Ansprüche 2 oder 3, wobei das Flüssigkeitssperrmittel ein Abdeckungselement umfasst, das vom Gehäuse aus nach außen vorsteht und zumindest teilweise über dem Lufteinlass angeordnet ist, um zu verhindern, das Flüssigkeit über den Lufteinlass in das Gehäuse eintritt.

5. Batteriemodul nach Anspruch 4, wobei das Abdeckungselement einen gekrümmten Plattenabschnitt, der sich über den Lufteinlass erstreckt, und zwei angrenzende Seitenabschnitte, die sich auswärts von dem Gehäuse zu dem gekrümmten Plattenabschnitt hin erstrecken, umfasst.

6. Batteriemodul nach Anspruch 4 oder 5, ferner umfassend ein Führungselement zum Leiten von Luft über den Lufteinlass in das Gehäuse hinein, wobei ein Raum zwischen dem Abdeckungselement und dem Führungselement vorgesehen ist.

7. Batteriemodul nach Anspruch 6, wobei das Führungselement einen gekrümmten Plattenabschnitt umfasst, der von dem Gehäuse aus nach außen und von dem Lufteinlass nach unten vorsteht.

8. Batteriemodul nach einem der vorangehenden Ansprüche, ferner umfassend ein Einströmungsrohr, das von dem Gehäuse aus nach außen vorsteht und mit dem Lufteinlass in flüssiger Verbindung steht.

9. Batteriemodul nach einem der Ansprüche 2 bis 8, wobei das Flüssigkeitssperrmittel Flüssigkeitsausgabemittel umfasst zum Ausgeben von Flüssigkeit, die innerhalb des Gehäuses empfangen wird, über den Lufteinlass.

10. Batteriemodul nach Anspruch 9, wobei das Flüssigkeitsausgabemittel eine Aussparung im Einströmungsrohr definiert.

11. Batteriemodul nach einem der vorangehenden Ansprüche, ferner umfassend elastische Vorspannmittel zum Vorspannen des Öffnungs-/Schließelements zu einem geschlossenen Zustand hin.

12. Batteriemodul nach einem der vorangehenden Ansprüche, wobei der Lufteinlass auf einem oberen Abschnitt von einer Fläche des Gehäuses vorgesehen ist und ein Luftauslass auf einem unteren Abschnitt von einer gegenüberliegenden Fläche des Gehäuses vorgesehen ist.

13. Elektrisches Fahrzeug, das ein Batteriemodul nach einem der vorangehenden Ansprüche enthält, wobei der Lufteinlass auf einer Fläche des Gehäuses angeordnet ist und dazu ausgerichtet ist, einer Bewegungsrichtung des elektrischen Fahrzeugs zugewandt zu sein, sodass der Luftstrom, der durch die Bewegung des elektrischen Fahrzeugs erzeugt wird, auf das Öffnungs-/Schließelement wirkt.

14. Elektrisches Fahrzeug nach Anspruch 13, wobei der Lufteinlass auf der Außenseite des Fahrzeugs freiliegt ist.

## Revendications

1. Module de batterie comprenant :
au moins une unité de batterie rechargeable ;
un boîtier pour loger la au moins une unité de batterie rechargeable, le boîtier ayant une entrée d'air pour le passage de l'air dans le boîtier,
dans lequel l'entrée d'air est prévue avec un élément d'ouverture / de fermeture configuré pour commander sélectivement un état d'ouverture de l'entrée d'air sur la base d'une pression d'écoulement d'air depuis l'extérieur du boîtier agissant sur l'élément d'ouverture / de fermeture,
dans lequel l'élément d'ouverture / de fermeture est installé en rotation sur ledit boîtier pour pivoter entre un état ouvert dans lequel l'air s'écoule dans l'entrée d'air et un état fermé dans lequel l'air est empêché de s'écouler dans l'entrée d'air,
ledit élément d'ouverture / de fermeture comprenant un élément d'arbre et une plaque de blocage reliée à l'élément d'arbre, un moyen de sollicitation élastique étant formé sur l'élément d'arbre,
ledit moyen de sollicitation élastique étant configuré pour appliquer une force de pression rotative sur la plaque de blocage de sorte que la plaque de blocage est mise sous pression dans l'entrée pour fermer l'entrée,
dans lequel l'entrée est configurée pour être ouverte lorsque ladite pression d'écoulement d'air est supérieure à la force de pression du moyen de sollicitation résilient agissant sur l'élément d'ouverture / de fermeture.

2. Module de batterie selon la revendication 1, comprenant en outre un moyen d'inhibition de liquide pour empêcher le passage du liquide via l'entrée d'air ou une sortie d'air du boîtier par rapport à la au moins une unité de batterie rechargeable.

3. Module de batterie selon la revendication 2, dans lequel le moyen d'inhibition de liquide comprend au moins un élément perméable à l'air disposé sur au moins l'une parmi l'entrée d'air et la sortie d'air.

4. Module de batterie selon la revendication 2 ou 3, dans lequel le moyen d'inhibition de liquide comprend un élément de couvercle faisant saillie vers l'extérieur à partir du boîtier et disposé au moins partiellement sur l'entrée d'air pour empêcher l'entrée de liquide dans le boîtier via l'entrée d'air.

5. Module de batterie selon la revendication 4, dans lequel l'élément de couvercle comprend une partie de plaque incurvée s'étendant sur l'entrée d'air et deux parties latérales attenantes s'étendant vers l'extérieur du boîtier jusqu'à la partie de plaque incurvée.

6. Module de batterie selon la revendication 4 ou 5, comprenant en outre un élément de guidage pour guider l'air dans le boîtier via l'entrée d'air, un espace pour l'écoulement d'air étant prévu entre l'élément de couvercle et l'élément de guidage.

7. Module de batterie selon la revendication 6, dans lequel l'élément de guidage comprend une partie de plaque incurvée faisant saillie vers l'extérieur à partir du boîtier et vers le bas à partir de l'entrée d'air.

8. Module de batterie selon l'une quelconque des revendications précédentes, comprenant en outre un tuyau d'entrée faisant saillie vers l'extérieur à partir du boîtier et étant en communication fluidique avec l'entrée d'air.

9. Module de batterie selon l'une quelconque des revendications 2 à 8, dans lequel le moyen d'inhibition de liquide comprend un moyen de décharge de liquide pour décharger le liquide reçu à l'intérieur du boîtier via l'entrée d'air.

10. Module de batterie selon la revendication 9, dans lequel le moyen de décharge de liquide définit une ouverture dans le tuyau d'entrée.

11. Module de batterie selon l'une quelconque des revendications précédentes, comprenant en outre un moyen de sollicitation élastiques pour solliciter l'élément d'ouverture / de fermeture vers un état fermé.

12. Module de batterie selon l'une quelconque des revendications précédentes, dans lequel l'entrée d'air est prévue sur une partie supérieure d'une face du boîtier et une sortie d'air est prévue sur une partie inférieure d'une face opposée du boîtier.

13. Véhicule électrique comprenant un module de batterie selon l'une quelconque des revendications précédentes, dans lequel l'entrée d'air est disposée sur une face du boîtier orientée pour faire face à une direction de déplacement du véhicule électrique de sorte que l'écoulement d'air généré par le déplacement du véhicule électrique agit sur l'élément d'ouverture / de fermeture.

14. Véhicule électrique selon la revendication 13, dans lequel l'entrée d'air est exposée à l'extérieur du véhicule.
